# DEMANDE DE BREVET EUROPEEN

(11) **EP 2 615 348 A2**
(43) Date de publication de la demande: **17.07.2013**
(21) Numéro de dépôt: 13150287.4
(22) Date de dépôt: 04.01.2013
(51) Int. Cl.: F16L 37/091

(54) **Raccord instantané**

(30) Priorité: 13.01.2012 US 201213349663
(71) Demandeur: COMAP, 69008 Lyon (FR)
(72) Inventeur: Le Cliniche, Pascal, 45000 ORLEANS (FR)
(74) Mandataire: Verriest, Philippe

(57) **Abrégé**

L'invention concerne un raccord (1) instantané pour au moins un tube, comportant :
- un corps (2) tubulaire présentant au moins une portion de réception (4) conformée pour recevoir un tronçon d'extrémité du tube, la portion de réception (4) étant réalisée, au moins en partie, en un matériau transparent, de manière à permettre la visualisation du tronçon d'extrémité du tube lorsque ce dernier est reçu ; et
- un organe de retenue (22) monté à l'intérieur de la portion de réception (4), agencé pour s'opposer au retrait du tube lorsqu'une force de traction est exercée sur ce tube.

## Description

La présente invention concerne un raccord instantané pour au moins un tube.

Un tel raccord trouve, par exemple, application pour la connexion fluidique d'un tube à un dispositif, tel qu'un robinet ou un collecteur, ou pour la connexion fluidique de tubes d'un réseau d'irrigation ou de distribution d'eau potable.

Un raccord instantané, connu de l'état de la technique, comporte un corps tubulaire présentant une portion de réception conformée pour recevoir un tronçon d'extrémité du tube. Le raccord comporte une bague, montée à l'intérieur du corps, équipée de griffes. Ces griffes sont agencées pour s'opposer au retrait du tube lorsqu'une force de traction est exercée sur ce tube.

En condition d'utilisation, un utilisateur engage un tronçon d'extrémité d'un tube dans la portion de réception. L'utilisateur ne dispose alors d'aucun moyen pour juger de la longueur de tube engagée.

En cas d'engagement insuffisant du tube, l'écoulement d'un fluide sous pression à l'intérieur de ce tube peut conduire à son expulsion hors de la portion de réception.

La présente invention vise à pallier cet inconvénient.

L'invention concerne un raccord instantané pour au moins un tube, comportant :
- un corps tubulaire présentant au moins une portion de réception conformée pour recevoir un tronçon d'extrémité du tube, la portion de réception étant réalisée, au moins en partie, en un matériau transparent, de manière à permettre la visualisation du tronçon d'extrémité du tube lorsque ce dernier est reçu dans la portion de réception ; et
- un organe de retenue monté à l'intérieur de la portion de réception, agencé pour s'opposer au retrait du tube lorsqu'une force de traction est exercée sur ce tube.

Dans la description, le terme « transparent » doit être entendu comme apte à laisser passer les ondes lumineuses du domaine visible, c'est-à-dire 380nm-780nm.

Lorsqu'un utilisateur engage le tronçon d'extrémité du tube dans la portion de réception du corps, cet utilisateur peut juger, en regardant à travers la partie de la portion de réception, de la longueur de tube engagée. L'utilisateur peut alors vérifier que l'engagement du tube dans le corps est suffisant pour assurer sa retenue en condition d'utilisation.

Le raccord selon l'invention peut comporter en outre une ou plusieurs des caractéristiques suivantes.

Dans une forme d'exécution préférée, la portion de réception du corps est réalisée en totalité en un matériau transparent.

Dans ces conditions, l'utilisateur peut visualiser le tronçon d'extrémité du tube engagé dans la portion de réception du corps dans sa totalité.

Suivant une caractéristique, le raccord comporte une coiffe réalisée en un matériau opaque, montée sur le corps et agencée pour révéler au moins en partie la portion de réception.

Dans la description, le terme « opaque » doit être entendu comme apte à réfléchir les ondes lumineuses du domaine visible.

Dans un mode de réalisation, le corps est réalisé en totalité en matériau transparent.

Selon une possibilité, le corps présente une portion de liaison reliée à ladite portion de réception ; et la coiffe est agencée pour dégager la portion de liaison en totalité.

Selon une autre possibilité, le corps présente une portion de liaison reliée à ladite portion de réception ; et la coiffe est agencée pour masquer la portion de liaison en totalité.

Un tel agencement permet à l'utilisateur de visualiser l'engagement du tuyau dans la portion de réception, tout en protégeant le fluide des rayons lumineux.

Une telle disposition permet de limiter le développement bactérien dans le fluide et par suite de garantir l'hygiène de ce fluide. Ce raccord est alors parfaitement adapté pour être utilisé dans un réseau de distribution d'eau potable.

Par exemple, la portion de réception comprend une première partie tournée vers la portion de liaison, et une seconde partie opposée à la première partie; et la coiffe comprend :
- un premier élément agencé pour masqué la seconde partie de la portion de réception ; et
- un second élément agencé pour masquer la portion de liaison en totalité, et présentant au moins une ouverture pour révéler la première partie de la portion de réception.

Dans un autre mode de réalisation, le raccord comporte un manchon, réalisé en un matériau opaque, fluidiquement connecté à la portion de réception.

Avantageusement, la portion de réception comprend une première partie tournée vers le manchon, et une seconde partie opposée à la première partie; et la coiffe comprend un élément agencé pour masquer la seconde partie de la portion de réception et révéler la première partie de la portion de réception.

Suivant une caractéristique, l'organe de retenue comprend une bague équipée de griffes agencées pour s'enfoncer dans la paroi du tube lorsqu'une force de traction est exercée sur ce tube.

Suivant une autre caractéristique, le raccord comporte un joint d'étanchéité à l'intérieur de la portion de réception, agencé pour assurer l'étanchéité entre le corps et le tube lorsque ce dernier est reçu dans la portion de réception.

L'invention concerne également l'utilisation d'un raccord tel que présenté ci-avant dans un réseau d'irrigation.

L'invention concerne enfin l'utilisation d'un raccord tel que présenté ci-avant dans un réseau de distribution d'eau potable.

L'invention sera mieux comprise à l'aide de la description qui suit en référence au dessin schématique annexé représentant, à titre d'exemple trois formes d'exécution d'un raccord instantanée selon l'invention.
Figure 1 est une vue de côté d'un premier raccord instantané selon l'invention ;
Figure 2 est une vue en coupe longitudinale du raccord de figure 1;
Figure 3 est une vue en perspective d'une variante du raccord de figure 1 ;
Figure 4 est une vue en perspective d'une autre variante du raccord de figure 1 ;
Figure 5 est une vue de côté d'un deuxième raccord instantané selon l'invention ;
Figure 6 est une vue en coupe longitudinale du raccord de figure 5 ;
Figure 7 est une vue de côté d'une variante du raccord de figure 5 ;
Figure 8 est une vue en perspective d'un troisième raccord instantané selon l'invention ;
Figure 9 est une vue en coupe longitudinale du raccord de figure 8;
Figure 10 est une vue de côté d'une variante du raccord de figure 8 ; et
Figure 11 est une vue de côté d'une autre variante du raccord de figure 1.

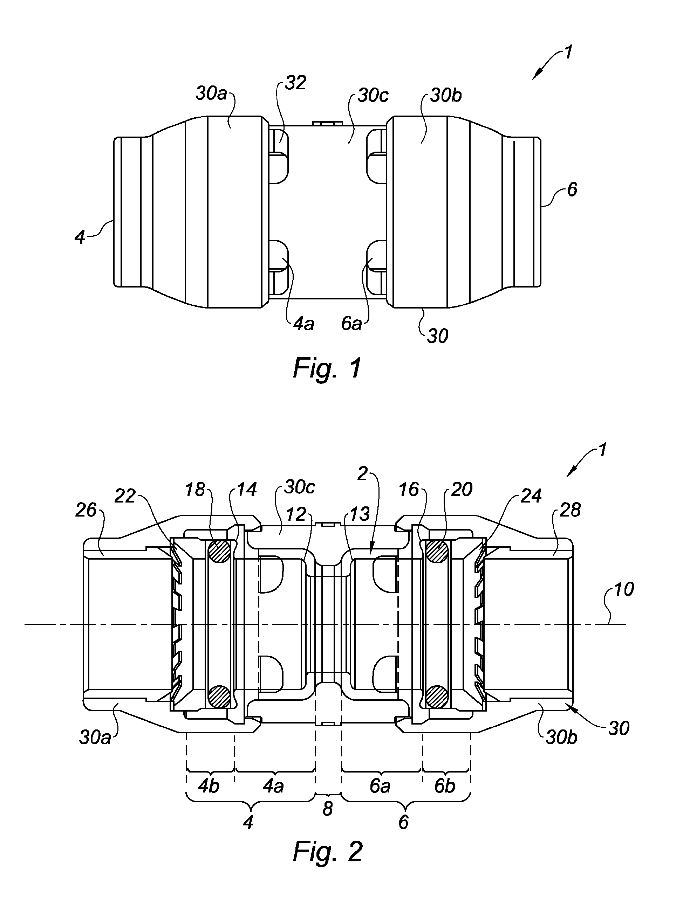

Les figures 1 et 2 représentent un raccord 1 instantané pour la connexion fluidique de deux tubes d'un réseau d'irrigation ou d'un réseau de distribution d'eau potable.

Le raccord 1 comporte un corps 2 tubulaire réalisé en matière plastique transparente. Ici, le corps 2 est réalisé en polypropylène clarifié. En variante, le corps 2 peut être réalisé en polyamide (PA), en polysulfone (PSU), en polyphénylsulfone (PPSU) ou autre.

Le corps 2 présente deux portions de réception 4 et 6 conformées pour recevoir un tronçon d'extrémité d'un tube, et une portion de liaison 8 reliant les portions de réception 4 et 6. Les portions de réception 4 et 6 s'étendent selon un même axe 10.

Les portions de réception 4 et 6 comprennent, respectivement, des parties 4a et 6a tournées vers la portion de liaison 8. Les portions de réception 4 et 6 comprennent, respectivement, des parties 4b et 6b opposées aux parties 4a et 6a.

Le diamètre intérieur des parties 4a et 6a est supérieur au diamètre intérieur de la portion de liaison 8, formant des épaulements 12 et 13.

Le diamètre intérieur des parties 4a et 6a est inférieur au diamètre intérieur des parties 4b et 6b, formant des épaulements 14 et 16.

Le raccord 1 comporte des joints 18 et 20 d'étanchéité montés à l'intérieur des portions de réception 4 et 6, en appui contre les épaulements 14 et 16. Ici, les joints 18 et 20 sont toriques.

Le raccord 1 comporte des organes de retenue 22 et 24 montés, respectivement, à l'intérieur des portions de réception 4 et 6. Les organes de retenue 22 et 24 prennent la forme de bagues équipées de griffes.

Le raccord 1 comporte deux cylindres 26 et 28 fluidiquement raccordés, respectivement, aux parties 4a et 6a des portions de réception 4 et 6. Les cylindres 26 et 28 sont conçus pour autoriser, si nécessaire, le retrait d'un tronçon d'extrémité de tube reçu dans une des portions de réception 4 ou 6.

Tel que représentés, les cylindres 26 et 28 présentent des diamètres intérieurs égaux aux diamètres intérieurs des parties, respectivement, 4a et 6a des portions de réception 4 et 6.

Le raccord 1 comporte enfin une coiffe 30 montée sur le corps. Dans l'exemple, la coiffe est constituée d'éléments 30a, 30b et 30c tubulaires. En variante, la coiffe 30 peut être constituée d'un unique élément.

L'élément 30a masque en totalité le cylindre 26 et la partie 4b de la portion de réception 4.

L'élément 30b masque en totalité le cylindre 28 et la partie 6b de la portion de réception 6.

L'élément 30c masque en totalité la portion de liaison 8, et présente une pluralité d'ouvertures 32 révélant les parties 4a et 6a des portions de réception 4 et 6.

Les éléments 30a, 30b et 30c sont réalisés en une matière plastique opaque, tel qu'en polypropylène ou en polyéthylène. En variante, les éléments 30a, 30b, et 30c peuvent être réalisés en polyamide (PA), en polysulfone (PSU), en polyphénylsulfone (PPSU) ou autre.

Les éléments 30a, 30b et 30c sont solidarisés au corps 2 et aux cylindres 26 et 28 par injection bimatière, par soudage ultrason, ou encore par encliquetage.

En condition d'utilisation, un utilisateur engage un tronçon d'extrémité d'un tube à l'intérieur de la portion de réception 4, engagé jusqu'à venir prendre appui contre l'épaulement 12.

L'utilisateur peut alors visualiser, par l'intermédiaire des ouvertures 32 et en regardant à travers la portion 4a, le tronçon d'extrémité du tube engagé dans la portion de réception 4. Ainsi, l'utilisateur peut juger de l'enfoncement satisfaisant ou non du tube.

Les joints 18 et 20 assurent l'étanchéité entre le corps 2 et le tube reçu dans la portion de réception 4.

Par ailleurs, lorsqu'une force de traction est exercée sur le tube, les griffes de l'organe de retenue 22 s'enfoncent dans la paroi du tube pour s'opposer à son retrait.

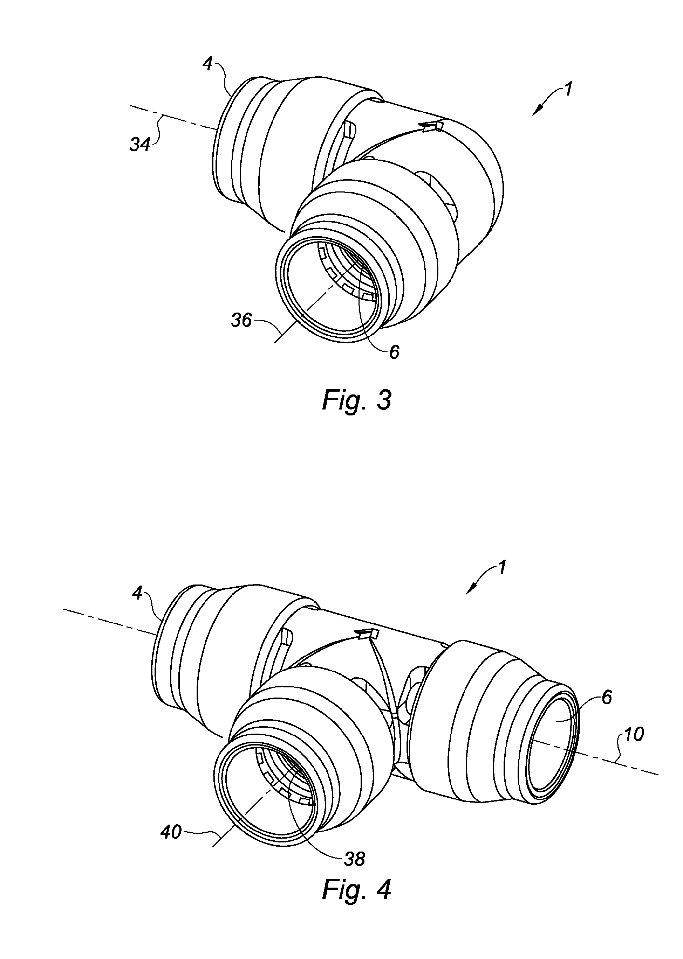

La figure 3 représente une variante du raccord 1, dans laquelle les portions de réception 4 et 6 ne s'étendent pas selon un même axe 10 mais selon des axes perpendiculaires 34 et 36.

La figure 4 représente une autre variante du raccord 1, dans laquelle le corps 2 présente une portion de réception 38 additionnelle. Cette portion de réception 38 s'étend selon un axe 40 perpendiculaire à l'axe 10.

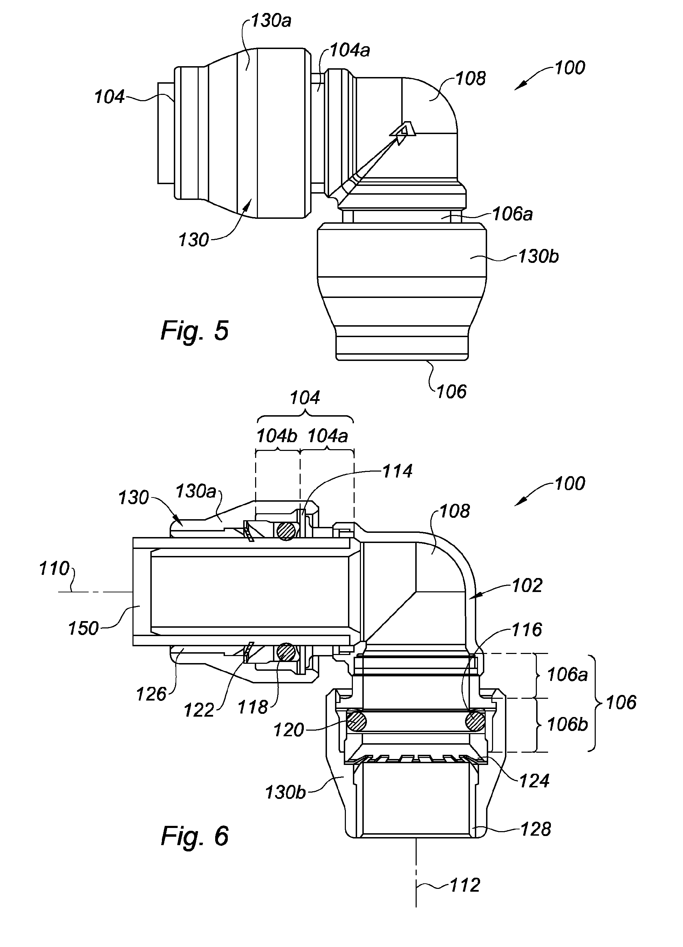

Les figures 5 et 6 représentent un raccord 100 instantané pour la connexion fluidique de deux tubes d'un réseau d'irrigation ou d'un réseau de distribution d'eau potable.

Le raccord 100 comporte un corps 102 tubulaire. Le corps 102 présente deux portions de réception 104 et 106 conformées pour recevoir un tronçon d'extrémité d'un tube.

Le corps 102 présente également un manchon 108 connectant fluidiquement les portions de réception 104 et 106. Ici, le manchon 108 est coudé.

Le manchon 108 est réalisé en une matière plastique opaque, tel qu'en polypropylène ou en polyéthylène. En variante, le manchon 108 peut être réalisé en polyamide (PA), en polysulfone (PSU), en polyphénylsulfone (PPSU) ou autre.

Les portions de réceptions 104 et 106 sont réalisées en matière plastique transparente, tel qu'en polypropylène clarifié.

Les portions de réception 104 et 106 s'étendent selon des axes 110 et 112 perpendiculaires.

Les portions de réception 104 et 106 comprennent des parties, respectivement, 104a et 106a tournées vers le manchon 108. Les portions de réception 104 et 106 comprennent des parties, respectivement, 104b et 106b opposées aux parties 104a et 106a.

Le diamètre intérieur des parties 104a et 106a est inférieur au diamètre intérieur des parties 104b et 106b, formant des épaulements 114 et 116.

Le raccord 100 comporte des joints 118 et 120 d'étanchéité montés à l'intérieur des portions de réception 104 et 106, en appui contre les épaulements 114 et 116. Ici, les joints 118 et 120 sont toriques.

Le raccord 100 comporte des organes de retenue 122 et 124 montés, respectivement, à l'intérieur des portions de réception 104 et 106. Les organes de retenue 122 et 124 prennent la forme de bagues équipées de griffes. La fonction des organes de retenue 122 et 124 apparaitra par la suite.

Le raccord 100 comporte deux cylindres 126 et 128 fluidiquement raccordés, respectivement, aux parties 104a et 106a des portions de réception 104 et 106. Les cylindres 126 et 128 sont conçus pour autoriser, si nécessaire, le retrait d'un tronçon d'extrémité de tube reçu dans une des portions de réception 4 ou 6.

Tel que représentés, les cylindres 126 et 128 présentent un diamètre intérieur égal aux diamètres intérieurs des parties 104a et 106a des portions de réception 104 et 106.

Le raccord 100 comporte enfin une coiffe 130 montée sur le corps 102. La coiffe est constituée d'éléments 130a et 130b tubulaires.

L'élément 130a masque en totalité le cylindre 126 et la partie 104b de la portion de réception 104.

L'élément 130b masque en totalité le cylindre 128 et la partie 106b de la portion de réception 106.

Les éléments 130a et 130b sont réalisés en une matière plastique opaque, tel qu'en polypropylène ou en polyéthylène.

Les éléments 130a et 130b sont solidarisés au corps 102 et aux cylindres 126 et 128 par injection bimatière, par soudage ultrason, par soudage rotation friction ou par encliquetage.

En condition d'utilisation, un utilisateur engage un tronçon d'extrémité d'un tube150 à l'intérieur de la portion de réception 104, jusqu'à ce prendre appui contre un épaulement du manchon 108.

L'utilisateur peut visualiser, à travers la partie 104a de la portion de réception 104, le tronçon d'extrémité engagé dans la portion de réception 104. Ainsi, l'utilisateur peut juger de l'enfoncement satisfaisant ou non du tronçon d'extrémité du tube 150.

Le joint 118 assure l'étanchéité entre le corps 102 et le tube 150 reçu dans la portion de réception 104.

Lorsqu'une force de traction est exercée sur le tube, les griffes de la bague 122 s'enfoncent dans la paroi du tube 150 pour s'opposer à son retrait.

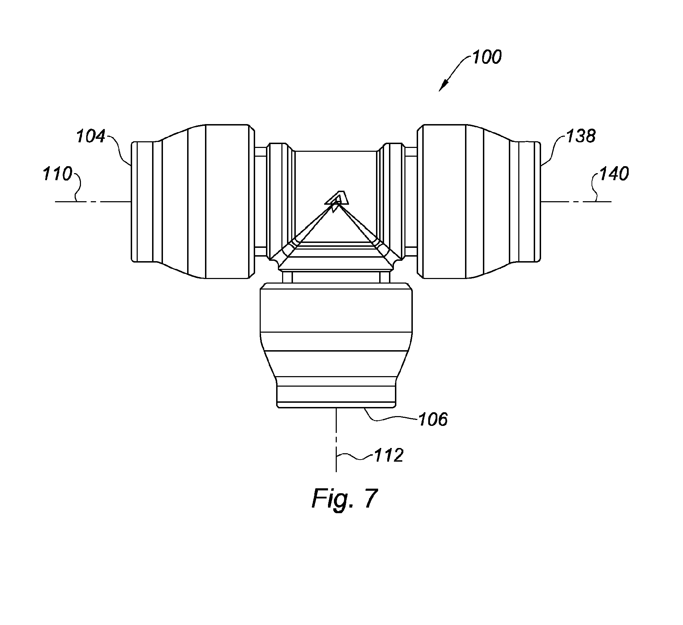

La figure 7 représente une variante du raccord 100, dans laquelle le corps 102 présente une portion de réception 138 additionnelle. Cette portion de réception 138 s'étend selon un axe 140 parallèle à l'axe 110.

En variante (non représentée), les portions de réception 104 et 106 ne s'étendent pas selon des axes perpendiculaires 110 et 112 mais selon un même axe.

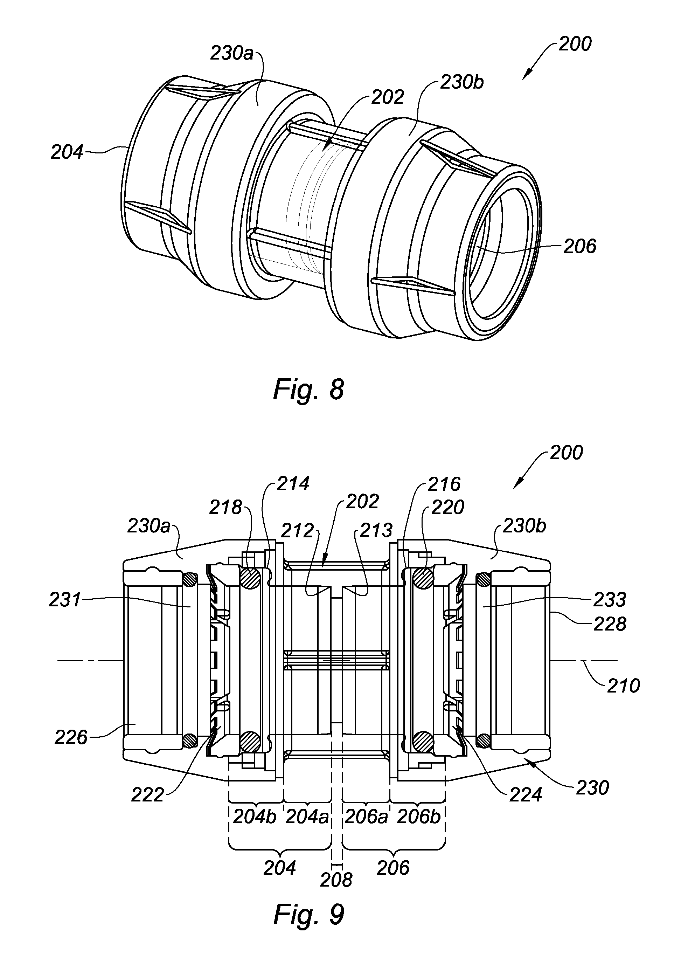

Les figures 8 et 9 représentent un raccord 200 instantané pour la connexion fluidique de deux tubes d'un réseau d'irrigation.

Le raccord 200 comporte un corps 202 tubulaire réalisé en matière plastique transparente, tel qu'en polypropylène clarifié.

Le corps 202 présente deux portions de réception 204 et 206 conformées pour recevoir un tronçon d'extrémité d'un tube. Les portions de réception 204 et 206 s'étendent selon un même axe 210.

Le corps 202 présente également une portion de liaison 208 reliant les portions de réception 204 et 206. Les portions de réception 204 et 206 comprennent, respectivement, des parties 204a et 206a tournées vers la portion de liaison 208. Les portions réception 204 et 206 comprennent, respectivement, des parties 204b et 206b opposées aux partie 204a et 206a.

Le diamètre intérieur des parties 204a et 206a est supérieur au diamètre intérieur de la portion de liaison 208, formant des épaulements 212 et 213.

Le diamètre intérieur des parties 204a et 206a est inférieur au diamètre intérieur des parties 204b et 206b, formant des épaulements 214 et 216.

Le raccord 200 comporte des joints 218 et 220 d'étanchéité montés à l'intérieur des portions de réception 204 et 206, en appui contre les épaulements 214 et 216. Ici, les joints 218 et 220 sont toriques.

Le raccord 200 comporte des organes de retenue 222 et 224 montés à l'intérieur des portions de réception 204 et 206. Les organes de retenue 222 et 224 prennent la forme de bagues équipées de griffes.

Le raccord 200 comporte deux cylindres 226 et 228 fluidiquement raccordés, respectivement aux parties 204 et 206a des portions de réception 204 et 206. Tel que représentés, les cylindres 226 et 228 présentent un diamètre intérieur égal aux diamètres intérieurs des parties 204a et 206a des portions de réception 204 et 206.

Le raccord 200 comporte enfin une coiffe 230 montée sur le corps 202. La coiffe 230 est constituée d'éléments 230a et 230b tubulaires.

L'élément 230a masque en totalité le cylindre 226 et la partie 204b de la portion de réception 204.

L'élément 230b masque en totalité le cylindre 228 et la partie 206b de la portion de réception 206.

Les éléments 230a et 230b sont réalisés en matière plastique opaque, tel qu'en polypropylène ou en polyéthylène.

Les éléments 230a et 230b sont solidarisés au corps 2 et aux cylindres 26 et 28 par soudage rotation friction, par soudage ultrason, par vissage ou par encliquetage.

Un joint 231 d'étanchéité, ici torique, est pincé entre le cylindre 226 et l'élément 230a afin d'assurer l'étanchéité entre le cylindre 226 et l'élément 230a. De même, un joint 233 d'étanchéité est pincé entre le cylindre 228 et l'élément 230b. Un tel joint, dit joint racleur anti-hulmidité, permet de protéger les organes de retenue 222 et 224, qui sont classiquement en métal, contre la corrosion. Un tel agencement est ainsi particulièrement avantageux lorsque le raccord 200 est enterré.

En condition d'utilisation, un utilisateur engage un tronçon d'extrémité d'un tube à l'intérieur de la portion de réception 204, jusqu'à venir prendre appui contre l'épaulement 212.

L'utilisateur peut visualiser, en regardant au travers de la portion 204a, le tronçon d'extrémité du tube engagé dans la portion de réception 204, et ainsi juger de l'enfoncement suffisant ou non du tube.

Les joints 218 et 220 assurent l'étanchéité entre le corps 2 et des tubes reçus dans les portions de réception 4 et 6.

Lorsqu'une force de traction est exercée sur les tubes, les griffes des bagues 222 et 224 s'enfoncent dans la paroi du tube pour s'opposer au retrait de ce tube.

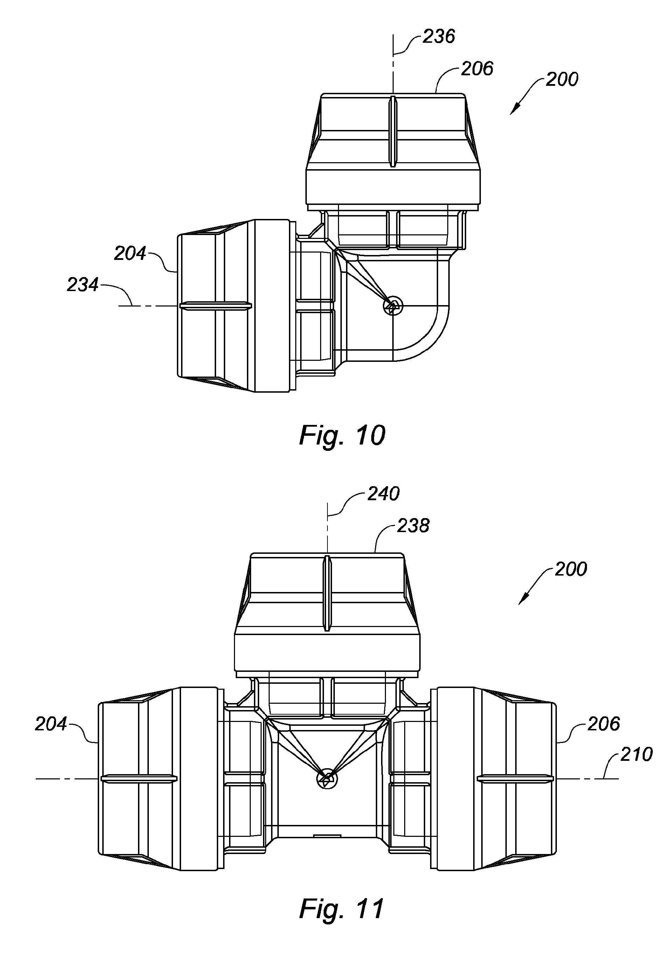

La figure 10 représente une variante du raccord 200, dans laquelle les portions de réception 204 et 206 ne s'étendent plus selon le même axe 210 mais selon des axes perpendiculaires 234 et 236.

La figure 11 représente une autre variante du raccord 200, dans laquelle le corps 202 présente une portion de réception 238 additionnelle. Cette portion de réception 238 s'étend selon un axe 240 perpendiculaire à l'axe 210. Comme il va de soi, l'invention ne se limite pas aux seules formes d'exécution du raccord décrites ci-dessus à titre d'exemple, elle en embrasse au contraire toutes les variantes de réalisation.

## Revendications

1. Raccord (1 ; 100 ; 200) instantané pour au moins un tube, comportant :
- un corps (2 ; 102 ; 202) tubulaire présentant au moins une portion de réception (4 ; 104 ; 204) conformée pour recevoir un tronçon d'extrémité du tube, la portion de réception (4 ; 104 ; 204) étant réalisée, au moins en partie, en un matériau transparent, de manière à permettre la visualisation du tronçon d'extrémité du tube lorsque ce dernier est reçu dans la portion de réception; et
- un organe de retenue (22 ; 122 ; 222) monté à l'intérieur de la portion de réception (4 ; 104 ; 204), agencé pour s'opposer au retrait du tube lorsqu'une force de traction est exercée sur ce tube.

2. Raccord (1 ; 100 ; 200) selon la revendication 1, dans lequel la portion de réception (4 ; 104 ; 204) du corps est réalisée en totalité en un matériau transparent.

3. Raccord (1 ; 100 ; 200) selon la revendication 2, comportant une coiffe (30 ; 130 ; 230) réalisée en un matériau opaque, montée sur le corps (2 ; 102 ; 202), et agencée pour révéler, au moins en partie, la portion de réception (4 ; 104 ; 204).

4. Raccord (1 ; 200) selon la revendication 3, dans lequel le corps (2 ; 202) est réalisé en totalité en matériau transparent.

5. Raccord (200) selon la revendication 4, dans lequel le corps (202) présente une portion de liaison (208) reliée à la portion de réception (204) ; et la coiffe (230) est agencée pour dégager la portion de liaison (208) en totalité.

6. Raccord (1) selon la revendication 4, dans lequel le corps (2) présente une portion de liaison (8) reliée à la portion de réception (4); et la coiffe (30) est agencée pour masquer la portion de liaison (8) en totalité.

7. Raccord (1) selon la revendication 6, dans lequel la portion de réception (4) comprend une première partie (4a) tournée vers la portion de liaison (8), et une seconde partie (4b) opposée à la première partie (4a); et la coiffe (30) comprend :
- un premier élément (30a) agencé pour masqué la seconde partie (4b) de la portion de réception (4) ; et
- un second élément (30c) agencé pour masquer la portion de liaison (8) en totalité, et présentant au moins une ouverture (32) pour révéler la première partie (4a) de la portion de réception (4).

8. Raccord (100) selon la revendication 3, comportant un manchon (108), réalisé en un matériau opaque, fluidiquement connecté à la portion de réception (104) du corps (102).

9. Raccord (100) selon la revendication 8, dans lequel la portion de réception (104) comprend une première partie (1 04a) tournée vers le manchon, et une seconde partie (104b) opposée à la première partie (104a); et la coiffe (130) comprend un élément (130a) agencé pour masquer la seconde partie (1 04b) de la portion de réception (104) et révéler la première partie (1 04a) de la portion de réception (104).

10. Raccord (1 ; 100 ; 200) selon l'une quelconque des revendications 1 à 9, dans lequel l'organe de retenue (22 ; 122 ; 222) comprend une bague équipée de griffes agencées pour s'enfoncer dans la paroi du tube lorsqu'une force de traction est exercée sur ce tube.

11. Raccord (1 ; 100 ; 200) selon l'une quelconque des revendications 1 à 10, comportant un joint d'étanchéité (18 ; 118; 218) à l'intérieur de la portion de réception (4 ; 104 ; 204), agencé pour assurer l'étanchéité entre le corps (2 ; 102 ; 202) et le tube lorsque ce dernier est reçu dans la portion de réception (4 ; 104 ; 204).

12. Utilisation d'un raccord (1 ; 100 ; 200) selon l'une quelconque des revendications 1 à 11 dans un réseau d'irrigation.

13. Utilisation d'un raccord (1 ; 100) selon l'une quelconque des revendications 6 à 11 dans un réseau de distribution d'eau potable.
